# EUROPÄISCHE PATENTSCHRIFT

(11) **EP 0 738 640 B1**
(45) Veröffentlichungstag und Bekanntmachung des Hinweises auf die Patenterteilung: **04.07.2001**
(21) Anmeldenummer: 96102935.2
(22) Anmeldetag: 28.02.1996
(51) Int. Cl.: B60T 17/18, B60T 13/26, B60T 13/68

(54) **Druckluft-Bremsanlage für ein Nutzfahrzeug**
Compressed air brake system for a commercial vehicle
Système de freinage à air comprimé pour véhicule commercial

(30) Priorität: 20.04.1995 DE 19514603
(43) Veröffentlichungstag der Anmeldung: 23.10.1996
(73) Patentinhaber: DaimlerChrysler AG, 70567 Stuttgart (DE)
(72) Erfinder: Fischer, Jörg, 73728 Esslingen (DE); Köster, Rolf, 76185 Karlsruhe 21 (DE)

(56) Entgegenhaltungen:
- EP-A- 0 481 227
- DE-A- 3 230 970
- DE-C- 19 504 393
- US-A- 4 003 605
- US-A- 5 190 357

## Beschreibung

Die Erfindung betrifft eine Druckluft-Bremsanlage für ein Nutzfahrzeug.

Eine derartige Druckluft-Bremsanlage, die zu einem Bremskreis zusammengefaßte, durch Druckbeaufschlagung und -entlastung je eines pneumatischen Zylinders anlegbare und lösbare Vorderradbremsen, zu einem weiteren Bremskreis zusammengefaßte, ebenfalls durch Druckbeaufschlagung und -entlastung von pneumatischen Zylindern betätigbare Hinterradbremsen, den Bremskreisen je einzeln zugeordnete Druckluftbehälter sowie eine zur Einsteuerung einer erwünschten Fahrzeugverzögerung betätigbare Bremsventilanordnung hat, die den Bremskreisen je einzeln zugeordnete Druckausgänge aufweist, an denen bei einer Betätigung der Bremsanlage von den Ausgangsdrücken der Druckluftbehälter abgeleitete, in monotoner Relation zu der vom Fahrer aufgebrachten Betätigungskraft stehende Drücke bereitstellbar sind, wobei der zur Aktivierung der einen Vorderradbremse vorgesehene pneumatische Zylinder direkt an den dem Vorderachs-bremskreis zugeordneten Druckausgang der Bremsventilanordnung angeschlossen ist, während der zur Aktivierung der anderen Vorderradbremse vorgesehene pneumatische Zylinder an diesen Druckausgang der Bremsventilanordnung über eine Umschalt-Ventilanordnung angeschlossen ist, die eine intaktem Zustand des Vorderachs-Bremskreises als Grundstellung zugeordnete Funktionsstellung 0 hat, in der der angeschlossene Bremszylinder mit dem dem Vorderachs-Bremskreis zugeordneten Druckausgang der Bremsventilanordnung verbunden ist, sowie eine einem fehlerbehafteten Zustand des Vorderachsbremskreises zugeordnete Not-Funktionsstellung als Schaltstellung I hat, in der der angeschlossene Bremszylinder mit einem Druck beaufschlagt ist, der mit demjenigen Druck korreliert ist, der an dem dem Hinterachs-Bremskreis zugeordneten Druckausgang der Bremsventilanordnung bereitstellbar ist, ist Gegenstand der älteren, nicht vorveröffentlichten Patentanmeldung P 195 04 393.6-21.

Der direkte Anschluß zwischen dem Bremszylinder der einen Vorderradbremse und dem dem Vorderachs - Bremskreis zugeordneten Druckausgang kann entweder ohne Zwischenschaltung weiterer Bauteile oder über ein ABS-Ventil erfolgen.

Bei der dieser Patentanmeldung entsprechenden Druckluft-Bremsanlage ist die Umschalt-Ventilanordnung, die im Falle eines Lecks im Vorderachs-Bremskreis in die Notbrems-Funktionsstellung gelangen muß, als druckbetätigtes Ventil ausgebildet, dessen Ansprechverhalten durch das Verhältnis der in die Bremszylinder des Vorderachs-Bremskreises und des Hinterachs-Bremskreises eingekoppelten Drücke bestimmt ist, die jedoch auch dann, wenn die Bremsanlage völlig intakt ist, sehr stark variieren können, z.B. dann, wenn das Fahrzeug mit einer automatisch lastabhängigen Bremskraftzumessung am Hinterachs-Bremskreis versehen ist, die bei einem unbeladenen Fahrzeug dazu führt, daß der in die Bremszylinder der Hinterradbremsen eingekoppelte Druck stark erniedrigt wird und daher das Verhältnis p_{VA}/p_{HA} des Druckes P_{VA}, der an dem Vorderachs-Druckausgang der Bremsventilanordnung ansteht, zu dem Druck p_{HA}, der am Hinterachsdruckausgang der Bremsventilanordnung ansteht, noch relativ hoch sein kann, auch wenn schon ein "kleiner" Defekt im Vorderachs-Bremskreis vorliegt. Es ist daher, nicht zuletzt auch wegen der einem druckgesteuerten Ventil anhaftenden Hysterese-Eigenschaften mit erheblichem Aufwand verbunden, das Ventil so auszulegen und auf die Bremsanlage abzustimmen, daß ein hinreichend definiertes bedarfsgerechtes Ansprechverhalten erzielbar ist. Es kommt hinzu, daß das Ventil als typisches Sonderventil herstellungs- und montagetechnischen Zusatzaufwand erfordert, der auch Kosten bedingt.

Aufgabe der Erfindung ist es daher, eine Bremsanlage mit Notbrems-Eigenschaften der eingangs genannten Art dahingehend zu verbessern, daß eine erhöhte Zuverlässigkeit einer bedarfsgerechten Umschaltung der Bremsanlage auf den Notbremsbetrieb am Vorderachs-Bremskreis erzielt wird und der hierfür erforderliche technische Aufwand reduziert ist.

Diese Aufgabe wird erfindungsgemäß durch die Merkmale des Anspruchs 1 gelöst. Die Umschalt-Ventilanordnung ist als elektrisch ansteuerbare Umschalteinrichtung ausgebildet, die aus ihrer dem intakten Zustand der Bremsanlage zugeordneten Grundstellung in ihre dem Notbremsbetrieb der Bremsanlage zugeordnete Funktionsstellung gelangt, wenn das elektrische Ausgangssignal eines elektronischen oder elektromechanischen Drucksensors, der zur Überwachung des Druckes im Druckluftbehälter des Vorderachs-Bremskreises vorgesehen ist, nur noch einem vorgegebenen Mindestwert des Druckes in diesem Behälter entspricht, wobei ein diesbezüglich geeigneter Ansprech-Schwellenwert, bei dessen Unterschreiten die Umschaltung der Bremsanlage auf den Notbremsbetrieb erfolgt, in dem nur noch eine der Vorderradbremsen aktivierbar ist, zwischen 30% und 50% des Nenn-Betriebsdruckes der Bremsanlage beträgt.

Die erfindungsgemäße Druckluft-Bremsanlage vermittelt zumindest die folgenden Vorteile:

Der im Druckluft-Vorratsbehälter des Vorderachs-Bremskreises herrschende Druck ist eine meßtechnisch einfach und mit hoher Präzision erfaßbare Größe, so daß auch deren Änderung mit guter Genauigkeit meßbar ist und somit eine aufgrund der elektrischen Ausgangssignale des Drucksensors mögliche statistische Auswertung dieser Signale auch zu einer Früherkennung von Undichtheiten im Vorderachs-Bremskreis genutzt und zur Anzeige eines Wartungsbedarfes der Bremsanlage ausgenutzt werden können. Wird dennoch die Notbremsfunktion benötigt, so wird diese, bedingt durch das definierte und schnelle Ansprechverhalten der Magnetventile der Umschalt-Einrichtung, zuverlässig eingeleitet.

Bei der durch die Merkmale des Anspruchs 2 angegebenen Gestaltung der Bremsanlage wird in deren Notbremsbetrieb der eine Bremszylinder des Vorderachs-Bremskreises mit dem vom Druckluftbehälter des Vorderachs-Bremskreises abgeleiteten, am Vorderachs-Druckausgang der Bremsventilanordnung bereitgestellten Druck versorgt, während der andere Bremszylinder des Vorderachs-Bremskreises an den dem Hinterachs-Bremskreis zugeordneten Druckausgang der Bremsventilanordnung angeschlossen ist. Je nachdem, an welcher Fahrzeugseite der Vorderachs-Bremskreis schadhaft ist, erfolgt die Notbremsung unter Ausnutzung des im Druckluftbehälter des Vorderachs-Bremskreises verbliebenen Druckluftvorrates oder unter Nutzung des im Druckluftbehälter des Hinterachs-Bremskreises vorhandenen Druckluftvorrats, wobei sich im Verlauf der Notbremsung der jeweils an den schadhaften Teil des Vorderachs-Bremskreises angeschlossene Druckluftvorratsbehälter vollständig entleeren kann.

Durch die Merkmale des Anspruchs 3 ist diesbezüglich eine besonders einfache Gestaltung der Bremsanlage angegeben, bei der zur Realisierung der Notbremsfunktion zusätzlich zu dem Drucksensor und einem dessen Ausgangssignale verarbeitenden Steuergerät lediglich ein 3/2-Wege-Magnetventil benötigt wird.

Bei der hierzu alternativen, funktionell jedoch gleich wirkenden Gestaltung der Bremsanlage gemäß den Merkmalen des Anspruchs 4 werden zur Realisierung der elektrisch ansteuerbaren Umschaltventilanordnung zwar zwei 2/2-Wege-Magnetventile benötigt, wobei jedoch eines davon das der jeweiligen Radbremse zugeordnete Einlaßventil eines am Fahrzeug gegebenenfalls vorhandenen Antiblockiersystems sein kann, so daß der insgesamt zur Realisierung der Bremsanlage erforderliche technische Aufwand sogar reduziert ist.

Bei der durch die Merkmale des Anspruchs 5 ihrem grundsätzlichen Aufbau nach umrissenen Gestaltung einer erfindungsgemäßen Bremsanlage ist im Notbremsbetrieb der eine Radbremszylinder an den dem Vorderachsbremskreis zugeordneten Druckausgang der Bremsventilanordnung angeschlossen, während der andere Radbremszylinder des Vorderachsbremskreises an den Druckausgang eines Relaisventils angeschlossen ist, das mit dem am Hinterachs-Druckausgang der Bremsventilanordnung bereitgestellten Druck gesteuert wird und in Proportionalität hierzu an seinem Druckausgang einen von einem zusätzlichen Druckluftbehälter des Fahrzeuges abgeleiteten Druck bereitstellt.

Je nachdem, auf welcher Fahrzeugseite der Fehler aufgetreten ist, wird bei einer Notbremsung entweder mit dem im Druckluftbehälter des Vorderachs-Bremskreises verbliebenen Druckluftvorrat oder mit dem in dem zusätzlichen Druckluftbehälter vorhandenen Druckluftvorrat einer der Vorderradbremszylinder aktiviert.

Die in Kombination hiermit möglichen Gestaltungen der Umschaltventilanordnung für den Notbremsbetrieb gemäß den Merkmalen der Ansprüche 6 und 7 sind den den Merkalen der Ansprüche 3 und 4 entsprechenden Gestaltungen der Umschalt-Ventilanordnung weitgehend bau- und funktionsanalog.

Weitere Einzelheiten der erfindungsgemäßen Bremsanlage ergeben sich aus der nachfolgenden Beschreibung von Ausführungsbeispielen anhand der Zeichnung. Es zeigen:
- Fig. 1: ein Ausführungsbeispiel einer erfindungsgemäßen Druckluft-Bremsanlage mit einer Notbetrieb-Umschalteinrichtung, die bei Auftreten eines Lecks im Vorderachsbremskreis auf Druckversorgung der Vorderradbremsen aus separaten Druckluftbehältern umschaltet,
- Fig. 2: ein Ausführungsbeispiel einer der Druckluft-Bremsanlage gemäß Fig. 1 funktionell entsprechenden Anlage für ein Fahrzeug mit Antiblockiersystem, und
- Fig. 3: ein weiteres Ausführungsbeispiel, das mit Ankopplung eines zusätzlichen Druckluftbehälters an eine der Vorderradbremsen über ein RelaisVentil arbeitet,
jeweils in schematisch vereinfachter Blockschaltbilddarstellung.

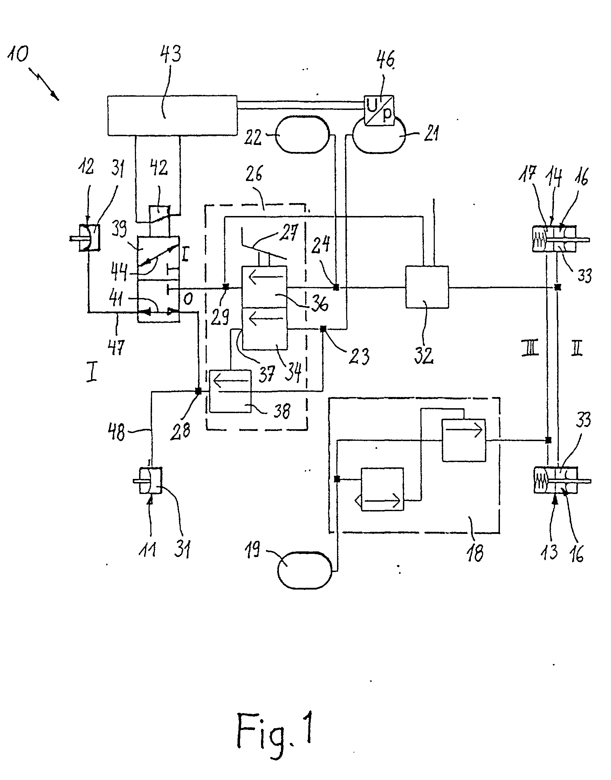

Die in der Fig. 1 insgesamt mit 10 bezeichnete Druckluft-Bremsanlage ist für ein Nutzfahrzeug gedacht, das eine hohe Vorderachslast hat und mindestens zeitweise mit relativ niedriger Hinterachslast gefahren werden muß. Derartige Fahrzeuge sind z.B. Sattelzugmaschinen, bei denen wegen ihres relativ kurzen Radstandes und ihrer großen Schwerpunkthöhe im Falle einer Bremsung eine drastische dynamische Achslastverlagerung auf die Vorderachse auftritt, mit der Folge, daß der größte Beitrag der Bremskräfte über die Vorderradbremsen aufgebracht werden muß, wenn das Fahrzeug mit hoher Verzögerung abgebremst werden soll.

Bei solchen Fahrzeugen muß daher dafür gesorgt sein, daß der Ausfall einer Vorderradbremse, z.B. durch Bruch der Versorgungsleitung eines zu ihrer Betätigung vorgesehenen Bremszylinders, nicht auch zu einem Ausfall der anderen Vorderradbremse führen kann.

Bei der Bremsanlage 10, deren Aufbau weitgehend demjenigen einer konventionellen Druckluft-Bremsanlage entspricht, sind die Vorderradbremsen 11 und 12, die in der Darstellung der Fig. 1 durch je einen Membranzylinder üblicher Bauart repräsentiert sind, zu einem Vorderachs-Bremskreis I und die Hinterradbremsen 13 und 14, die durch je einen Kombizylinder üblicher Bauart repräsentiert sind, zu einem vom Vorderachs-Bremskreis I unabhängigen Hinterachs-Bremskreis II der Betriebsbremse des Fahrzeuges zusammengefaßt.

Im Rahmen des Hinterachs-Betriebsbremskreises II sind die Einkammer-Membranzylinder 16 der Kombizylinder 13 und 14 ausgenutzt, deren Federspeicherzylinder 17 in üblicher Weise zur Realisierung der Feststell-Bremseinrichtung des Fahrzeuges ausgenutzt sind, die im übrigen durch ihre - manuell betätigbare - Steuerventilanordnung 18 und ein über diese zur Druckversorgung des Feststell-Bremskreises III vorgesehenen Druckluftbehälter (19) repräsentiert ist.

Dem Vorderachs-Bremskreis I und dem von diesem unabhängigen Hinterachs-Bremskreis II der Betriebsbremse ist je ein Druckluftbehälter 21 bzw. 22 zugeordnet, die an separate Druckluft-Versorgungseingänge 23 bzw. 24 einer insgesamt mit 26 bezeichneten Betriebs-Bremsventilanordnung angeschlossen sind, mittels derer der Fahrer durch Betätigung eines Pedals 27 die Beträge der an separaten, den Bremskreisen I und II je einzeln zugeordneten Druckausgängen 28 bzw. 29 bereitstellbaren Drücke einsteuern kann, mittels derer zum einen die Antriebskammern 31 der Membranzylinder 11 und 12 der Vorderradbremsen beaufschlagbar sind und zum anderen ein dem Hinterachs-Bremskreis II der Betriebsbremse zugeordneter Bremskraftregler 32 - pneumatisch - im Sinne einer Druck-Sollwertvorgabe ansteuerbar ist, der in Relation zu der mittels einer nicht dargestellten Sensor-Einrichtung erfaßten Hinterachslast des Fahrzeuges mehr oder weniger hohe Drücke P_{HA} in die Antriebskammern 33 der Membranzylinder 16 des Hinterachs-Bremskreises II der Betriebsbremse einkoppelt, die mit dem am Druckausgang 29 der Bremsventilanordnung bereitgestellten Druck variieren, dem Betrage nach jedoch durch das Achslast-Verhältnis modifiziert sind.

Die Bremsventilanordnung 26 umfaßt zwei mittels des Pedals "im Gleichlauf" betätigbare Proportionalventile 34 und 36, die eingangsseitig mit je einem der Versorgungseingänge 23 bzw. 24 der Bremsventilanordnung 26 verbunden sind und an ihren Ausgängen 37 bzw. 29 jeweils einen zu der Kraft, mit der der Fahrer das Pedal 27 betätigt, proportionalen Ausgangsdruck abgeben. Zwischen den Vorderachs-Druckausgang 28 der Bremsventilanordnung 26 und den Druckausgang 37 ihres dem Vorderachs-Bremskreis I zugeordneten Proportionalventils 34 ist beim dargestellten, speziellen Ausführungsbeispiel ein Relaisventil 38 geschaltet, das versorgungsseitig seinerseits mit dem Versorgungsanschluß 23 der Betriebsbremsventilanordnung 26 verbunden ist.

Der insoweit erläuterte Aufbau der Bremsanlage 10 kann als bekannt vorausgesetzt werden.

In Unterschied zu einer konventionellen Bremsanlage ist bei der Bremsanlage 10 nur der eine Membranzylinder 11 des Vorderachs-Bremskreises direkt an den Vorderachs-Druckausgang 28 der Bremsventilanordnung 26 angeschlossen, während der andere Membranzylinder 12 des Vorderachs-Bremskreises nur in der Grundstellung 0 eines Notbetrieb-Umschaltventils 39 über einen in dieser Grundstellung freigegebenen Durchflußpfad 41 mit dem Vorderachs-Druckausgang 28 der Bremsventilanordnung 26 verbunden ist.

Dieses Notbetrieb-Umschaltventil 39 ist als 3/2-Wege-Magnetventil ausgebildet, das durch Erregung seines Steuermagneten 42 mit einem Ausgangssignal einer elektronischen Steuereinheit 43 in die zur Grundstellung alternative Funktionsstellung I umgeschaltet wird, in der die Antriebskammer 31 des angeschlossenen Membranzylinders 12 - beim dargestellten Ausführungsbeispiel desjenigen der rechten Vorderradbremse - gegen den Vorderachs-Druckausgang 28 der Bremsventilanordnung 26 abgesperrt, dafür jedoch über einen in der Schaltstellung I freigegebenen Durchflußpfad 44 mit dem Hinterachs-Druckausgang 29 der Bremsventilanordnung 26 verbunden ist.

Die Auslösung eines die Umschaltung des Notbetrieb-Steuerventils 39 vermittelnden Ausgangssignals der elektronischen Steuereinheit 43 erfolgt in Relation zum Ausgangssignal eines zur Überwachung des Druckes im Druckluftbehälter 21 des Vorderachs-Bremskreises I vorgesehenen elektronischen oder elektromechanischen Drucksensors 46, der als Druck-Spannungswandler ausgebildet ist, der ein zu dem im Druckluftbehälter 21 herrschenden Druck proportionales Spannungs-Ausgangssignal erzeugt, das der elektronischen Steuereinheit als Informationssignal für den Betriebszustand des Vorderachs-Bremskreises bei einer Bremsung zugeleitet ist. Fällt der Druck im Druckluftbehälter 21 des Vorderachs-Bremskreises I unter einen Mindestwert von z.B. 40% des Nennbetriebsdruckes der Bremsanlage 10, so wird von der elektronischen Steuereinheit 43 das die Umschaltung des Notbetrieb-Umschaltventils 39 vermittelnde Ausgangssignal erzeugt, das sodann für die restliche Dauer einer ablaufenden Bremsung aufrechterhalten wird.

Die hieraus resultierenden Notbetriebs-Funktionseigenschaften der Bremsanlage 10 sind die folgenden:

Tritt im Verlauf einer normal, d.h. bei intakter Bremsanlage beginnenden Bremsung ein Leck in der Druckversorgungsleitung 47 des Membranzylinders 12 der rechten Vorderradbremse auf, das zu einem Druckabfall im Druckluftbehälter 21 des Vorderachs-Bremskreises I führt, so wird ab dem Zeitpunkt, zu dem der Behälterdruck den genannten Schwellenwert unterschreitet, das Notbetrieb-Umschaltventil 39 in dessen Funktionsstellung I umgeschaltet, mit der Folge, daß sich zwar jetzt der dem Hinterachs-Bremskreis II der Betriebsbremse zugeordnete Druckluftbehälter 22 über das Leck entleeren kann, mit der weiteren Folge, daß der Hinterachs-Bremskreis II der Bremsanlage 10 ausfällt, was jedoch ohne weiteres hinehmbar ist, daß jedoch der Membranzylinder 11 der linken Vorderradbremse weiterhin mittels der Bremsventilanordnung 26 steuerbar aus dem restlichen Druckluftvorrat des Druckluftbehälters 21 des Vorderachs-Bremskreises I versorgbar bleibt und eine hinreichende Bremsverzögerung erzielbar ist, um das Fahrzeug sicher zum Stillstand zu bringen. Tritt das zu einem Druckabfall im Druckluftbehälter 21 führende Leck im Bereich der linken Vorderradbremse, z.B. an der Druckversorgungsleitung 48 ihres Membranzylinders 11 auf, so hat dies nach einem Umschalten des Notbetrieb-Steuerventils 39 in dessen Schaltstellung I zur Folge, daß sich nunmehr zwar im Verlauf der weiteren Bremsung der dem Vorderachs-Bremskreis I zugeordnete Druckluftbehälter 21 völlig entleeren kann, jedoch nunmehr der Membranzylinder 12 der rechten Vorderradbremse mit dem am Hinterachs-Druckausgang 29 der Bremsventilanordnung 26 bereitgestellten Druck beaufschlagbar bleibt und hierdurch weiterhin eine hinreichende Fahrzeugverzögerung gewährleistet ist.

Die geschilderte Notbetriebs-Funktion der Bremsanlage 10 ist insbesondere dann von Bedeutung, wenn ein Sattelzugfahrzeug ohne Sattelanhänger gefahren wird.

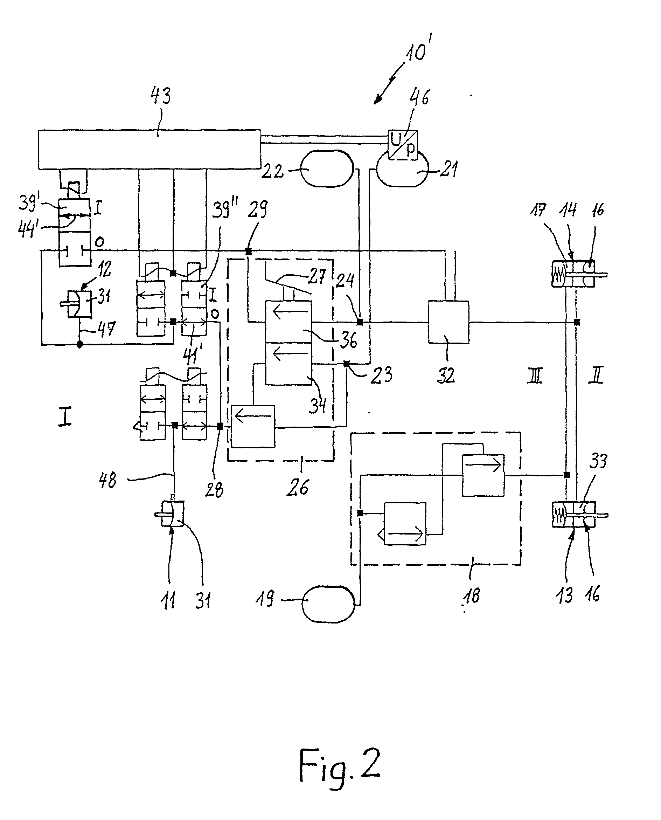

Die in der Fig. 2 dargestellte Bremsanlage 10'ist mit der Bremsanlage gemäß Fig. 1 hinsichtlich der NotbremsFunktion identisch und unterscheidet sich von dieser in baulicher Hinsicht lediglich dadurch, daß anstelle eines einzigen Notbetrieb-Umschaltventils 39, das beim Ausführungsbeispiel gemäß Fig. 1 als 3/2-Wege-Magnetventil ausgebildet ist, eine zwei 2/2-Wege-Magnetventile 39'und 39" umfassende Magnetventilanordnung vorgesehen ist, die gemeinsam umschaltbar sind und dadurch dieselbe Funktion vermitteln wie das Notbetrieb-Umschaltventil 39 der Bremsanlage 10 gemäß Fig. 1.

Das eine 2/2-Wege-Magnetventil 39'ist zwischen den Hinterachs-Druckausgang 29 der Bremsventilanordnung 26 und die Druckversorgungsleitung 47 des Membranzylinders 12 der rechten Vorderradbremse geschaltet. Seine Grundstellung 0 ist die Sperrstellung, seine erregte Stellung I die Durchfluß-Stellung, in der sein den Hinterachs-Druckausgang 29 der Bremsventilanordnung 26 mit der Druckversorgungsleitung 47 des Membranzylinders 12 verbindender Durchflußpfad 44'freigegeben ist.

Das andere 2/2-Wege-Magnetventil 39" hat als Grundstellung 0 seine Durchfluß-Stellung, in welcher der den Vorderachs-Druckausgang 28 der Bremsventilanordnung 26 mit der Druckversorgungsleitung 47 des Membranzylinders 12 der rechten Vorderradbremse verbindende Durchflußpfad 41'freigegeben ist und als gleichzeitig mit der Durchflußstellung I des erstgenannten 2/2-Wege-Magnetventils 39'eingenommene Schaltstellung I seine Sperrstellung.

Als "zweites" 2/2-Wege-Magnetventil 39", in dessen dem normalen Bremsbetrieb zugeordneter Grundstellung 0 der den Vorderachs-Druckausgang 28 der Bremsventilanordnung 26 mit dem Membranzylinder 12 der rechten Vorderradbremse verbindende Durchflußpfad 41'freigegeben ist, ist das der rechten Vorderradbremse 12 des Fahrzeuges zugeordnete Einlaßventil eines für sich bekannten Antiblockiersystems ausgenutzt, mit dem das Fahrzeug, für das die Bremsanlage 10'gemäß Fig. 2 gedacht ist, ausgerüstet ist.

Soweit für Elemente der Bremsanlage 10'gemäß Fig. 2 Bezugszeichen angegeben sind, die anhand der Beschreibung der Bremsanlage 10'nicht ausdrücklich erwähnt worden sind, jedoch mit in der Fig. 1 angegebenen Bezugszeichen identisch sind, soll dies den Verweis auf die anhand der Fig. 1 gegebene Beschreibung dieser Elemente beinhalten.

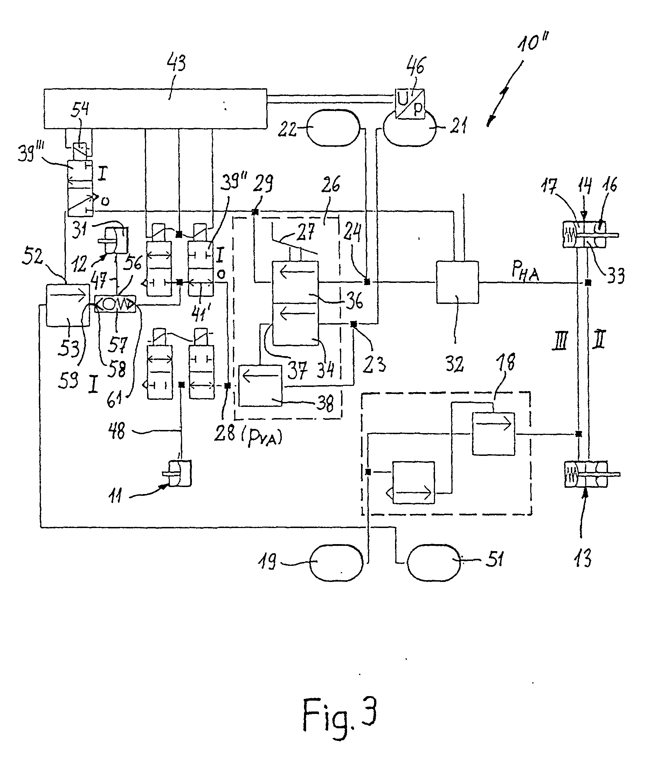

Dasselbe gilt sinngemäß mit Bezug auf die nachfolgend anhand der Fig. 3 zu erläuternde Bremsanlage 10", die auch nur anhand konstruktiver und funktioneller Unterschiede gegenüber den Bremsanlagen 10 und 10' erläutert werden wird:

Auch die Bremsanlage 10'' ist für ein Fahrzeug mit einem Antiblockiersystem konzipiert, das jedoch zusätzlich zu Druckluftbehältern 19, 21 und 22 für den Feststell-Bremskreis III und die Betriebsbremskreise I und II mindestens einen weiteren Druckluftbehälter 51 für einen weiteren, am Fahrzeug vorgesehenen Verbraucher umfaßt, der auf dem Nennbetriebsdruck-Niveau der Bremsanlage 10' betreibbar ist.

Bei der Bremsanlage 10'' ist das Prinzip, in einem bei Ausfall einer der Vorderradbremsen 11 oder 12 notwedig werdenden Notbremsbetrieb die Vorderradbremsen 11 und 12 an separate, miteinander nicht in kommunizierender Verbindung stehende Druckluftbehälter anzuschließen und die Vorderradbremsen 11 und 12 gegeneinander abzusperren, wobei die eine Vorderradbremse 11 über den Druckluftbehälter 21 des Vorderachs-Bremskreises I mit Druckluft versorgbar bleibt, in der Weise realisiert, daß - im Notbremsbetrieb - die andere Vorderradbremse 12, im dargestellten Ausführungsbeispiel wiederum die rechte Vorderradbremse - aus dem zustätzlichen Druckluftbehälter 51 mit Druckluft versorgt wird.

Als elektrisch ansteuerbare Ventile 39" und 39''' der Umschalt-Ventilanordnung, die durch Ausgangssignale der elektronischen Steuereinheit 43 in Abhängigkeit von den druckcharakteristischen Ausgangssignalen des dem Vorderachs-Druckluftbehälter 21 zugeordneten Drucksensors 46 ansteuerbar sind, ist zum einen wieder das auch für die Antiblockierregelung an der angeschlossenen - rechten - Vorderradbremse 12 vorgesehene Einlaßventil 39" des Antiblockiersystems, entsprechend der Bremsanlage 10' gemäß Fig. 2, ausgenutzt, sowie ein als 3/2-Wege-Magnetventil ausgebildetes Umschaltventil 39''', das in seiner dem Not-Bremsbetrieb zugeordneten Funktionsstellung I den Hinterachs-Druckausgang 29 der Bremsventil-anordnung 26 mit dem Steueranschluß 52 eines Relaisventils 53 verbindet, über das ein mit dem Steuerdruck, d.h. dem am Hinterachs-Druckausgang 29 der Bremsventil-anordnung 26 während einer Bremsung bereitgestellten Ausgangsdruck variierender, von dem in dem zusätzlichen Druckluftspeicher 51 herrschenden Druck abgeleiteter Druck in den Membranzylinder 12 der rechten Vorderradbremse einkoppelbar ist.

Das 3/2-Wege-Magnetventil 39''' hat als Grundstellung 0 eine Funktionsstellung, in der der Steueranschluß 52 des Relaisventils 53 zur Umgebungsatmosphäre hin druckentlastet und gleichzeitig gegen den Hinterachs-Druckausgang 29 der Bremsventilanordnung 26 abgesperrt ist.

In der bei Erregung seines Steuermagneten 54 mit einem Notfunktions-Steuersignal der elektronischen Steuereinheit 43 eingenommenen Schaltstellung I des 3/2-Wege-Magnetventils 39''' ist der Steueranschluß 52 des Relaisventils 53 gegen die Umgebungsatmosphäre abgesperrt.

Die Antriebskammer 31 des gegen den Vorderachs-Druckausgang 28 der Bremsventilanordnung 26 absperrbaren, im Notbremsbetrieb über das Relaisventil 53 versorgbaren Membranzylinders 12 ist an den Ausgang 56 eines Wechselventils 57 angeschlossen, das einen ersten Druckeingang 58 hat, der mit dem Druckausgang 59 des Relaisventils 53 verbunden ist, sowie einen zweiten Druckeingang 61, der in der Grundstellung 0 des ABS-Einlaßventils 39'', das auch Funktionselement der Notfunktionsumschalteinrichtung 39", 39"', 57 ist, mit dem Vorderachs-Druckausgang 28 der Bremsventilanordnung 26 verbunden und in der erregten Stellung I des ABS-Einlaßventils 39" gegen diesen Druckausgang 28 abgesperrt ist.

Das Wechselventil 57 vermittelt die Funktion eines - druckgesteuerten - 3/2-Wege-Ventils, das jeweils denjenigen seiner Druckeingänge 58 oder 61, an dem der höhere Druck ansteht, mit der Antriebskammer 31 des angeschlossenen Membranzylinders 12 verbindet.

Die Funktion der Bremsanlage 10'' im Falle eines Defektes im Bereich der einen oder der anderen Vorderradbremse 11 oder 12 ist derjenigen der Bremsanlagen 10 oder 10'gemäß den Fig. 1 oder 2 völlig analog.

Im Falle eines Lecks an der gegen den Vorderachs-Druckausgang 28 der Bremsventilanordnung 26 durch Umschaltung der Notbetrieb-Umschaltventilanordnung 39", 39''' absperrbaren Radbremse 12 wird diese gegen den Vorderachs-Druckausgang 28 der Bremsventilanordnung 26 abgesperrt, mit der Folge, daß die andere Vorderradbremse 11 unter Ausnutzung der im Druckluftbehälter 21 vorhandenen Druckluft, mittels der Bremsventilanordnung 26 gesteuert, betätigbar bleibt, wobei sich zwar der weitere Druckluftbehälter 51, der nunmehr an die schadhafte Vorderradbremse 12 angeschlossen ist, entleeren kann, der Hinterachs-Bremskreis II der Betriebsbremse jedoch von einem Defekt in deren Vorderachs-Bremskreis I unbeeinflußt bleibt. Im Falle eines Defektes an der "direkt" an den Vorderachs-Druckausgang 28 der Bremsventilanordnung 26 angeschlossenen Radbremse 11 bleibt die andere Radbremse 12, die mittels der Umschalt-Ventilanordnung 39", 39''', 57 gegen den Vorderachs-Druckausgang 28 der Bremsventilanordnung absperrbar ist, gesteuert über den am Hinterachs-Druckausgang 29 der Bremsventilanordnung 26 bereitgestellten Druck, aus dem weiteren Druckluftbehälter 51 des Fahrzeuges funktionsfähig.

Eine durchaus gängige Gestaltung des Relaisventils 53, über das im Notbremsbetrieb von dem Ausgangsdruck des zusätzlichen Druckluftbehälters 51 abgeleiteter Druck in die angeschlossene Radbremse 12 einkoppelbar ist, vorausgesetzt, ist eine Modifikation der Bremsanlage 10" gemäß Fig. 3 auch dahingehend möglich, daß anstelle eines als 3/2-Wege-Magnetventil ausgebildeten Umschaltventils 39''' ein als 2/2-Wege-Ventil ausgebildetes Magnetventil vorgesehen ist, das eine sperrende Grundstellung 0 und als erregte Stellung eine Durchflußstellung I hat und der Antriebsdruckraum 31 des Membranzylinders 12 der angeschlossenen Radbremse unmittelbar, d.h. ohne Zwischenschaltung eines Wechsel-ventils 57 an den Druckausgang 59 des Relaisventils 53 sowie das als Funkionselement der Umschalt-Ventilanordnung mit ausgenutzte Einlaßventil 39" des Antiblockiersystems des Fahrzeuges angeschlossen ist.

## Patentansprüche

1. Druckluft-Bremsanlage für ein Nutzfahrzeug mit
a) zu einem Bremskreis zusammengefaßten, durch Druckbeaufschlagung oder -entlastung je eines pneumatischen Zylinders anlegbaren und lösbaren Vorderradbremsen,
b) zu einem weiteren Bremskreis zusammengefaßten, ebenfalls durch Druckbeaufschlagung und -entlastung von pneumatischen Zylindern betätigbaren Hinterradbremsen
c) den Bremskreisen je einzeln zugeordneten Druckluftbehältern,
d) einer zur Einsteuerung einer erwünschten Fahrzeugverzögerung vom Fahrer betätigbaren Bremsventilanordnung, die den Bremskreisen je einzeln zugeordnete Druckausgänge hat, an denen von den Ausgangsdrücken der Druckluftbehälter abgeleitete, in monotoner Korrelation zu der vom Fahrer aufgebrachten Betätigungskraft statische Drücke bereitstellbar sind, wobei
e) der zur Aktivierung der einen Vorderradbremse vorgesehene Bremszylinder direkt an den dem Vorderachs-Bremskreis (I) zugeordneten Druckausgang der Bremsventilanordnung angeschlossen ist, während der zur Aktivierung der anderen Vorderradbremse vorgesehene Bremszylinder an diesen Druckausgang der Bremsventilanordnung über eine Umschalt-Ventilanordnung angeschlossen ist, die
f) eine dem intakten Zustand des Vorderachs-Bremskreises (I) als Grundstellung zugeordnete Funktionsstellung (0) hat, in der der angeschlossene Bremszylinder mit dem dem Vorderachs-Bremskreis(I) zugeordneten Druckausgang der Bremsventilanordnung verbunden ist, sowie
g) eine einem fehlerbehafteten Zustand des Vorderachs-Bremskreises(I) zugeordnete Notfunktionsstellung als Schaltstellung (I) hat, in der der angeschlossene Bremszylinder mit einem Druck beaufschlagbar ist, der mit demjenigen Druck korreliert ist, der an dem dem Hinterachs-Bremskreis (II) zugeordneten Druckausgang der Bremsventilanordnung bereitstellbar ist,
wobei die Umschalt-Ventilanordnung als elektrisch ansteuerbare Umschalt-Einrichtung ausgebildet ist, die aus ihrer dem intakten Zustand der Bremsanlage zugeordneten Grundstellung (0) in ihre dem Notbrems-Betrieb der Bremsanlage zugeordnete Funktionsstellung (I) gelangt, wenn das elektrische Ausgangssignal eines elektronischen oder elektromechanischen Drucksensors (46), der zur Überwachung des Druckes im Druckluftbehälter (21) des Vorderachs-Bremskreises (I) vorgesehen ist, nur noch einem vorgegebenen Mindestwert des Druckes in diesem Behälter entspricht.

2. Druckluft-Bremsanlage nach Anspruch 1, **dadurch gekennzeichnet**, daß in der Grundstellung (0) der Umschalt-Ventilanordnung der dem Vorderachs-Bremskreis (I) zugeordnete Druckausgang (28) der Bremsventilanordnung (26) mit der Antriebskammer (31) des angeschlossenen Bremszylinders (12) verbunden ist, jedoch gegen den dem Hinterachs-Bremskreis (II) zugeordneten Druckausgang (29) der Bremsventilanordnung (26) abgesperrt ist, und in der erregten Funktionsstellung (I) der Umschalt-Ventilanordnung der der angeschlossene Bremszylinder (12) mit dem dem Hinterachs-Bremskreis (II) zugeordneten Druckausgang (29) der Bremsventil-anordnung (26) verbunden, jedoch gegen deren dem Vorderachs-Bremskreis (I) zugeordneten Druckausgang (28) abgesperrt ist (Fig. 1 und 2).

3. Druckluft-Bremsanlage nach Anspruch 2, **dadurch gekennzeichnet**, daß die Umschaltventilanordnung als 3/2-Wege-Magnetventil (39) ausgebildet ist, das eine federzentrierte Grundstellung (0) hat, in der ein die Verbindung des Vorderachs-Druckausganges (28) der Bremsventilanordnung (26) mit dem angeschlossenen Bremszylinder (12) vermittelnder Durchflußpfad (41) freigegeben ist, der Bremszylinder (12) jedoch gegen den Hinterachs-Druckausgang (29) der Bremsventilanordnung (26) abgesperrt ist, und durch Erregung seines Steuermagneten (42) mit dem fehlerhafte Funktionen des Vorderachs-Bremskreises (I) signalisierenden Ausgangssignal eines elektronischen Steuergeräts (43) in seine Funktionsstellung (I) gelangt, in der der Vorderachs-Druckausgang (28) der Bremsventilanordnung (26) gegen den Bremszylinder (12) abgesperrt, dieser jedoch mit dem Hinterachs-Druckausgang (29) der Bremsventilanordnung (26) verbunden ist (Fig. 1).

4. Druckluft-Bremsanlage nach Anspruch 2, **dadurch gekennzeichnet**, daß die Umschalt-Ventilanordnung zwei gemeinsam ansteuerbare 2/2-Wege-Magnetventile umfaßt, wobei das eine Magnetventil (39''), das in seiner Grundstellung (0) offen und in seiner erregten Schaltstellung (I) sperrend ist, zwischen den Vorderachs-Druckausgang (28) der Bremsventil-anordnung (26) und die Antriebskammer (31) des angeschlossenen Bremszylinders (12) geschaltet ist, während das andere 2/2-Wege-Magnetventil (39'), das in seiner Grundstellung (O) sperrend und in seiner erregten Schaltstellung (I) offen ist, zwischen die Antriebskammer (31) des angeschlossenen Bremszylinders (12) und den Hinterachs-Druckausgang (29) der Bremsventilanordnung (26) geschaltet ist (Fig. 2).

5. Druckluft-Bremsanlage nach Anspruch 1, **dadurch gekennzeichnet**, daß in der Grundstellung (0) der Umschalt-Ventilanordnung (39'',39''',57) die Antriebskammer (31) des angeschlossenen Bremszylinders (12) mit dem am Vorderachs-Druckausgang (28) der Bremsventilanordnung (26) bereitgestellten Druck beaufschlagbar ist und gegen den Hinterachs-Druckausgang (29) der Bremsventilanordnung (26) abgesperrt ist und in der erregten, dem Notbremsbetrieb zugeordneten Funktionsstellung (I) der Vorderachs-Druckausgang (28) der Bremsventilanordnung (26) gegen den über die Umschaltventilanordnung (39',39''57) angeschlossenen Bremszylinder (12) abgesperrt ist, der Hinterachs-Druckausgang (29) der Bremsventilanordnung (26) jedoch mit dem Steuerdruck-Eingang eines RelaisVentil (53) verbunden ist, mittels dessen ein mit dem Steuerdruck variierender, von einem weiteren Druckluftbehälter (51) abgeleiteter Druck in die Antriebskammer (31) des angeschlossenen Bremszylinders (12) einkoppelbar ist (Fig. 3).

6. Druckluft-Bremsanlage nach Anspruch 5, **dadurch gekennzeichnet**, daß die Antriebskammer (31) des gegen den Vorderachs-Druckausgang (28) der Bremsventilanordnung (26) absperrbaren Bremszylinders (12) des Vorderachs-Bremskreises (I) an den Ausgang (56) eines Wechsel-Ventils (57) angeschlossen ist, das einen permanent mit dem Druckausgang (59) des Relaisventils (53) verbundenen Eingang (58) und einen über ein 2/2-Wege-Magnetventil (39") der Umschalt-Ventilanordnung (39'',39''',57) mit dem Vorderachs-Druckausgang (28) der Bremsventilanordnung (26) verbindbaren Eingang (61) hat, das in seiner dem intakten Zustand der Bremsanlage zugeordneten Grundstellung (0) diesen Eingang (61) mit dem Vorderachs-Druckausgang (28) der Bremsventil-anordnung (26) verbindet, und in seiner der Notbremsfunktion zugeordneten - erregten - Schaltstellung (I) den Vorderachs-Druckausgang (28) der Bremventil-Anordnung (26) gegen das Wechselventil (57) absperrt (Fig. 3).

7. Druckluft-Bremsanlage nach Anspruch 6, **dadurch gekennzeichnet**, daß zwischen den Steuereingang des Relaisventils (53) und den Hinterachs-Druckausgang (29) der Bremsventil-Anordnung (26) ein gemeinsam mit dem 2/2-Wege-Magnetventil (39'') umschaltbares 3/2-Wege-Magnetventil (39''') vorgesehen ist, in dessen dem normalen Bremsbetrieb zugeordneter Grundstellung (0) der Steuereingang (52) des Relaisventils (53) druckentlastet sowie gegen den Hinterachs-Druckausgang (29) der Bremsventilanordnung (26) abgesperrt ist, und in dessen dem Not-bremsbetrieb zugeordneter Schaltstellung (I) der Steuereingang (52) des Relaisventils (53) mit dem Hinterachs-Druckausgang (29) der Bremsventilanordnung (26) verbunden ist (Fig. 3).

8. Druckluft-Bremsanlage nach einem der Ansprüche 1 bis 7, **dadurch gekennzeichnet**, daß der Druck-Schwellenwert, bei dessen Unterschreiten die Umschaltung der Bremsanlage (10;10';10'') auf den Notbremsbetrieb erfolgt, zwischen 30 % und 50 % des Nennbetriebsdruckes der Bremsanlage entspricht.

## Claims

1. A compressed air braking system for a utility vehicle with
a) front wheel brakes which can each be applied and released by means of the application or relief of pressure on a pneumatic cylinder and are combined in one braking circuit,
b) rear wheel brakes which can also be activated by means of the application and relief of pressure on pneumatic cylinders and are combined in another braking circuit,
c) individual compressed air containers for each braking circuit,
d) a brake valve arrangement which can be actuated by the driver to retard a vehicle as desired and which has an individual pressure outlet for each braking circuit at which static pressures derived from the output pressures of the compressed air containers can be provided in monotonous correlation with the actuation force applied by the driver, with
e) the brake cylinder provided to activate one front wheel brake being connected directly to the pressure output of the brake valve arrangement for the front axle braking circuit (I) while the brake cylinder provided to activate the other front wheel brake is connected to this pressure output of the brake valve arrangement via a switching valve arrangement which
f) has a functional position (0) for normal operation of the front axle braking circuit (I) as the basic position in which the connected brake cylinder is linked to the pressure output of the brake valve arrangement for the front axle braking circuit (I), and
g) has an emergency function position for abnormal operation of the front axle braking circuit (I) as switch position (I) in which a pressure can be applied to the connected brake cylinder which is correlated with the pressure which can be provided at the pressure output of the brake valve arrangement for the rear axle braking circuit (II),
the switching valve arrangement being designed as an electrically triggerable switching device which switches from the basic position (0) for normal operation of the braking system to the functional position (I) for emergency braking operation if the electrical output signal of an electronic or electromechanical pressure sensor (46) provided to monitor the pressure in the compressed air cylinder (21) of the front axle braking circuit (I) corresponds to a pre-set minimum value of the pressure in this container.

2. A compressed air braking system in accordance with Claim 1, **characterised in that** in the basic position (0) of the switch valve arrangement the pressure output (28) of the brake valve arrangement (26) for the front axle braking circuit (I) is connected to the drive chamber (31) of the connected brake cylinder (12) but is blocked against the pressure output (29) of the brake valve arrangement (26) for the rear axle braking circuit (II), and in the excited functional position (I) of the switching valve arrangement that of the connected brake cylinder (12) is connected to the pressure output (29) of the brake valve arrangement (26) for the rear axle pressure output (29) but is blocked against the pressure output (28) allocated to the front axle braking circuit (I) (Figs. 1 and 2).

3. A compressed air braking system in accordance with Claim 2, **characterised in that** the switch valve arrangement is designed as a 3/2-way solenoid valve (39) which has a spring-centred basic position (0) in which a throughflow path (41) which creates the connection between the front axle pressure output (28) of the brake valve arrangement (26) and the connected broke cylinder (12) is released, but the brake cylinder (12) is blocked against the rear axle pressure output (29) of the brake valve arrangement (26) and with the output signal of an electronic control device (43) signalling the faulty operation of the front axle braking circuit (I) by means of the excitement of its control magnets (42) switches to its functional position (I) in which the front axle pressure output (28) of the brake valve arrangement (26) blocks against the brake cylinder (12) which is, however, connected to the rear axle pressure output (29) of the brake valve arrangement (26) (Fig. 1).

4. A compressed air braking system in accordance with Claim 2, **characterised in that** the switch valve arrangement comprises two jointly triggerable 2/2-way solenoid valves, with one of the solenoid valves (39") which is open in the basic position (0) and closed in its excited switch position (I) is positioned between the front axle pressure output (28) of the brake valve arrangement (26) and the drive chamber (31) of the connected brake cylinder (12), while the other 2/2-way solenoid valve (39') which is closed in its basic position (O) and open in its excited switch position (I) is positioned between the drive chamber (31) of the connected brake cylinder (12) and the rear axle pressure output (29) of the brake valve arrangement (26) (Fig. 2).

5. A compressed air braking system in accordance with Claim 1, **characterised in that** in the basic position (0) of the switch valve arrangement (39''; 39'''; 57) the pressure provided at the front axle pressure output (28) of the brake valve arrangement (26) can be applied to the drive chamber (31) of the connected brake cylinder (12) which is blocked against the rear axle pressure output (29) of the brake valve arrangement (26) and in the excited functional position (I) for emergency braking operation the front axle pressure output (28) of the brake valve arrangement (26) is blocked against the brake cylinder (12) which is connected by means of the switching valve arrangement (39'; 39"; 57), but the rear axle pressure output (29) of the brake valve arrangement (26) is connected to the control pressure input of a relay valve (52) by means of which a pressure which varies with the control pressure derived from a further compressed air container (51) can be connected to the drive chamber (31) of the connected brake cylinder (12) (Fig. 3).

6. A compressed air braking system in accordance with Claim 5, **characterised in that** the drive chamber (31) of the brake cylinder (12) of the front axle braking circuit (I) which can be blocked against the front axle pressure output (28) of the brake valve arrangement (26) is connected to the output (56) of a shuttle valve (57) which has an input (58) which is permanently connected to the pressure output (59) of the relay valve (53) and an input (61) which can be connected to the front axle pressure output (28) of the brake valve arrangement (26) by means of a 2/2-way solenoid valve (39") in the switch valve arrangement (39''; 39'''; 57) and which, when in the basic position (0) for normal operation of the braking system, connects this input (61) to the front axle pressure output (28) of the brake valve arrangement (26) and, when in the - excited - switch position (I) for emergency braking operation, blocks the front axle pressure output (28) of the brake valve arrangement (26) against the shuttle valve (57) (Fig. 3).

7. A compressed air braking system in accordance with Claim 6, **characterised in that** a 3/2-way solenoid valve (39''') which can be switched with the 2/2-way solenoid valve (39'') is provided between the control input of the relay valve (53) and the rear axle pressure output (29) of the brake valve arrangement (26) which, when the control input (52) of the relay valve (53) is in the basic position (0) for normal braking operation, is relieved of pressure and blocked against the rear axle pressure output (29) of the brake valve arrangement (26) and which, when the control input (52) of the relay valve (53) is in switch position (I) for emergency braking operation, is connected to the rear axle pressure output (29) of the brake valve arrangement (26) (Fig. 3).

8. A compressed air braking system in accordance with one of Claims 1 to 7, **characterised in that** the pressure threshold value below which the braking system (10; 10'; 10") switches to emergency braking operation corresponds to between 30 % and 50 % of the rated operating pressure of the braking system.

## Revendications

1. Installation de freinage à l'air comprimé pour un véhicule utilitaire, comportant
a) des freins de roue avant, regroupés en un circuit de freinage, susceptibles d'être actionnés et relâchés, par sollicitation par ou relâchement d'une pression, chaque fois d'un vérin d'un cylindre pneumatique,
b) des freins de roue arrière, regroupés en un autre circuit de freinage, également susceptibles d'être actionnés depuis des cylindres pneumatiques, par sollicitation par et relâchement d'une pression.
c) des réservoirs à air comprimé, associés individuellement à chacun des circuits de freinage
d) un agencement à valve de commande de frein, susceptible d'être commandé par le conducteur pour commander un ralentissement souhaité du véhicule, l'agencement comportant des sorties de pression associées chacune aux circuits de freinage, sorties de pression auxquelles des pressions statiques, dérivées des pressions de sortie du réservoir à air comprimé, appliquées en corrélation monotone envers la force d'actionnement appliquée par le conducteur, sont susceptibles d'être fournies, où
e) le cylindre de frein, prévu pour l'activation d'un frein d'essieu avant, est directement raccordé à la sortie de pression, associée au circuit de freinage d'essieu avant (I) de l'agencement à valve de commande de frein, tandis que le cylindre de frein, prévu pour l'activation de l'autre frein d'essieu avant, est raccordé à cette sortie de pression de l'agencement à valve de commande de frein, par l'intermédiaire d'un agencement à soupape à commutation, qui
f) comporte une position fonctionnelle (0) associée, à titre de position de base, à l'état intact du circuit de freinage d'essieu avant (I), dans laquelle le cylindre de frein raccordé est relié à la sortie de pression, associée au circuit de freinage d'essieu avant (1), de l'agencement à valve de commande de frein, et
g) comporte une position de fonction de secours, à titre de position de commutation (I), associée à un état défectueux du circuit de freinage d'essieu avant (I), dans laquelle le cylindre de frein raccordé est susceptible d'être sollicité par une pression corrélée à la pression susceptible d'être fournie à la sortie de pression, associée au circuit de freinage d'essieu arrière (II), de l'agencement à valve de commande de frein,
l'agencement à soupape à commutation étant réalisé sous la forme de dispositif de commutation pouvant être commandé électriquement, qui passe de sa position de base (0), associée à l'état intact de l'installation de freinage, à sa position fonctionnelle (1), associée au fonctionnement en frein de secours de l'installation de freinage, lorsque le signal de sortie électrique d'un capteur de pression (46) électronique ou éLectromécanique, qui est prévu pour assurer la surveillance de la pression du réservoir à air comprimé (21) du circuit de freinage d'essieu avant (1) ne correspond plus qu'à une valeur minimale prédéterminée de la pression régnant dans ce réservoir.

2. Installation de freinage à air comprimé selon la revendication 1, caractérisée en ce que, dans la position de base (0) de l'agencement à soupape à commutation, la sortie de pression (28), associée au circuit de freinage d'essieu avant (I), de l'agencement à valve de commande de frein (26) est reliée à la chambre d'entraînement (31) du cylindre de frein (12) raccordé, cependant en étant isolée envers la sortie de pression (29) associée au circuit de frein d'essieu arrière (II) de l'agencement à valve de commande de frein (26) et, dans la position fonctionnelle (I) générée de l'agencement à soupape à commutation, le cylindre de frein (12) raccordé est relié à la sortie de pression (29), associée au circuit de frein d'essieu arrière (II), de l'agencement à valve de commande de frein (26), cependant en étant isolé envers sa sortie de pression (28), associée au circuit de freinage d'essieu avant (I) (figures 1 et 2).

3. Installation de freinage à air comprimé selon la revendication 2, caractérisée en ce que l'agencement à soupape à commutation est réalisé sous la forme d'une électrovanne à 3 voies/2 positions (39), ayant une position de base (0) centrée par l'action d'un ressort, position de base dans laquelle un chemin de passage (41), établissant la liaison entre la sortie de pression d'essieu avant (28) de l'agencement à valve de commande de frein (26) avec le cylindre de frein (12) raccordé, est ouvert, le cylindre de frein (12) étant cependant isolé envers la sortie de pression d'essieu arrière (29) de l'agencement à valve de commande de frein (26) et qui, par une excitation de son aimant de commande (42) à l'aide du signal de sortie qui signale le fonctionnement défectueux du circuit de freinage d'essieu (I), signal provenant d'un appareil de commande électronique (43), passe à sa position fonctionnelle (I), dans laquelle la sortie de pression (28) d'essieu avant de l'agencement à valve de commande de frein (26) est isolée envers le cylindre de frein (12), celui-ci cependant étant relié à la sortie de pression d'essieu arrière (29) de l'agencement à valve de commande de frein (26) (figure 1).

4. Installation de freinage à air comprimé selon la revendication 2, caractérisée en ce que l'agencement à soupape à commutation comprend deux électrovannes à 2 voies/2 positions, susceptibles d'être commandées conjointement, une première électrovanne (39"), qui est ouverte à sa position de base (0) et isolante à sa position de commutation (I) excitée, est branchée entre la sortie de pression d'essieu avant (28) de l'agencement à valve de commande de frein (26) entre la chambre d'entraînement (31) du cylindre de frein (12) raccordé, tandis que l'autre électrovanne à 2 voies/2 positions (39'), qui est isolante à sa position de base (0) et ouverte à sa position de commutation excitée (I), est branchée entre la chambre d'entraînement (31) du cylindre de frein (12) raccordé et la sortie de pression (29) d'essieu arrière de l'agencement à valve de commande de frein (26) (figure 2).

5. Installation de freinage à air comprimé selon la revendication 1, caractérisée en ce que, dans la position de base (0) de l'agencement à soupape à commutation (39", 39" ', 57), la chambre d'entraînement (31) du cylindre de frein raccordé est susceptible d'être sollicitée par la pression fournie à la sortie de pression d'essieu avant (28) de l'agencement à valve de commande de frein (26) et est isolée envers la sortie de pression d'essieu arrière (29) de l'agencement à valve de commande de frein et, dans la position fonctionnelle (I) excitée, associée au fonctionnement en frein de secours, la sortie de pression d'essieu (28) de l'agencement à valve de commande de frein (26) est isolée envers le cylindre de frein (12) raccordé par l'agencement à soupape à commutation (39', 39", 57), la sortie de pression (29) d'essieu arrière de l'agencement à valve de commande de frein (26) est cependant reliée à l'entrée'de pression de commande d'une valve relais (53), au moyen de laquelle une pression, variant avec la pression de commande, dérivée d'un autre réservoir à air comprimé (51), est susceptible d'être introduite et couplée dans la chambre d'entraînement (31) du cylindre de frein (12) raccordé (figure 3).

6. Installation de freinage à air comprimé selon la revendication 5, caractérisée en ce que la chambre d'entraînement (31) du cylindre de frein (12), susceptible d'être isolé envers la sortie de pression d'essieu avant (28) de l'agencement à valve de commande de frein (26), du circuit de freinage d'essieu avant (I) est raccordée à la sortie (56) d'une soupape à alternance (57), ayant une entrée (58), reliée en permanence à la sortie de pression (59) de la valve relais (53), et une entrée (61), susceptible d'être reliée, par une électrovanne à 2 voies/2 positions (39") de l'agencement à soupape à commutation (39", 39"', 57), à la sortie de pression d'essieu avant (28) de l'agencement à valve de commande de frein (26), qui dans sa position de base (0) associée à l'état intact de l'installation de freinage, relie cette entrée (61) à la sortie de pression d'essieu avant (28) de l'agencement à valve de commande de frein (26) et qui, dans la position de commutation (I) - excitée - associée à la fonction de freinage de secours, isole la sortie de pression d'essieu avant (28) de l'agencement à valve de commande de frein (26) envers la soupape à alternance (57) (figure 3).

7. Installation de freinage à air comprimé selon la revendication, caractérisée en ce qu'entre l'entrée de commande de la valve relais (53) et la sortie de pression d'essieu arrière (29) de l'agencement à valve de commande de frein (26) est prévue une électrovanne à 3 voies/2 positions (39"'), commutable conjointement avec l'électrovanne à 2 voies/2 positions (39"), électrovanne (39") à la position de base (0), associée au fonctionnement de freinage normal, de laquelle l'entrée de commande (52) de la valve relais (53) est déchargée de pression, ainsi qu'isolée envers la sortie de pression d'essieu arrière (29) de l'agencement à valve de commande de frein (26) et, dans la position de commutation (I) de laquelle, associée au fonctionnement en frein de secours, l'entrée de commande (52) de la valve relais (53) est reliée à la sortie de pression d'essieu arrière (29) de l'agencement à valve de commande de frein (26) (figure 3).

8. Installation de freinage à air comprimé selon l'une des revendications 1 à 7, caractérisée en ce que la valeur de seuil de pression, lors de la descente au-dessous de laquelle la commutation de l'installation de freinage (10; 10', 10") en fonctionnement de frein de secours s'effectue, correspond à une valeur située entre 30 % et 50 % de la pression de fonctionnement nominale de l'installation de freinage.
